# FASCICULE DE BREVET EUROPEEN

(11) **EP 2 032 335 B1**
(45) Date de publication et mention de la délivrance du brevet: **07.05.2014**
(21) Numéro de dépôt: 07788924.4
(22) Date de dépôt: 25.06.2007
(51) Int. Cl.: B29C 49/42

(54) **DISPOSITIF DE FIXATION D'UN FOND DE MOULE SUR UN SUPPORT ET LE SUPPORT**
VORRICHTUNG ZUR BEFESTIGUNG ENER FORMGRUNDPLATTE AN EINEM MEDIUM UND DIE FORMGRUNDPLATTE
DEVICE FOR ATTACHING A MOULD BASE ON A MEDIUM AND THE MOULD BASE

(30) Priorité: 26.06.2006 FR 0605696
(43) Date de publication de la demande: 11.03.2009
(60) Demande divisionnaire: 09008199.3
(73) Titulaire: Sidel Participations, 76930 Octeville Sur Mer (FR)
(72) Inventeur: DAGORN, Daniel, F-76930 Octeville sur Mer (FR); LEMBLE, Thierry, F-76930 Octeville sur Mer (FR); SALEIX, Julien, F-74000 Annecy (FR); TARISSAN, Fabrice, F-74370 Pringy (FR)
(74) Mandataire: Louiset, Raphael
(86) Numéro de dépôt international: PCT/FR2007/001045
(87) Numéro de publication internationale: WO 2008/000938

(56) Documents cités:
- GB-A- 2 201 727
- US-A- 5 750 161
- US-A1- 2002 090 409

## Description

L'invention se rapport au domaine de la fabrication des récipients, notamment par soufflage ou étirage soufflage.

Le soufflage des récipients a lieu dans un moule, muni d'une cavité dans laquelle on introduit une ébauche (généralement en matière thermoplastique) préalablement chauffée, cette ébauche étant mise sous pression pour lui conférer une forme souhaitée correspondant à celle de la cavité.

Les moules modernes sont généralement en trois parties : deux demi-moules, articulés dans un plan perpendiculaire à un axe principal du moule, soit en translation soit en rotation autour d'une charnière commune (le moule étant alors dit du type « portefeuille »), et un fond de moule déplaçable parallèlement à l'axe du moule.

Les moules sont généralement régulés en température, soit pour leur refroidissement dans les applications les plus courantes, soit pour leur chauffe dans les applications du type HR (Heat Resistant), dans lesquelles les récipients subissent une thermofixation consistant à les maintenir temporairement dans le moule chauffé pour les rendre mécaniquement résistants à la rétractation lors d'un remplissage à chaud. Des conduits pour la circulation d'un fluide caloporteur (en général de l'huile ou de l'eau) sont à cet effet ménagés dans les demi-moules, et dans le fond de moule.

Dans une configuration ouverte, les deux demi-moules sont écartés l'un de l'autre et le fond de moule se trouve dans une position basse, ce qui permet l'évacuation d'un récipient formé et l'introduction d'une nouvelle ébauche. Dans une configuration fermée, le fond de moule est dans une position haute et les deux demi-moules sont refermés sur lui.

Afin de permettre l'interchangeabilité du fond de moule pour autoriser la fabrication de récipients de gammes (et de formes) différentes au sein d'une même machine, le fond de moule est ordinairement fixé de manière amovible sur un support coulissant, muni d'un conduit d'arrivée du fluide caloporteur, et d'un conduit d'évacuation. Un dispositif de fixation avec raccord fluidique permet d'assurer la fixation amovible du fond de moule sur la sellette, tout en assurant la continuité étanche des circulations du fluide caloporteur.

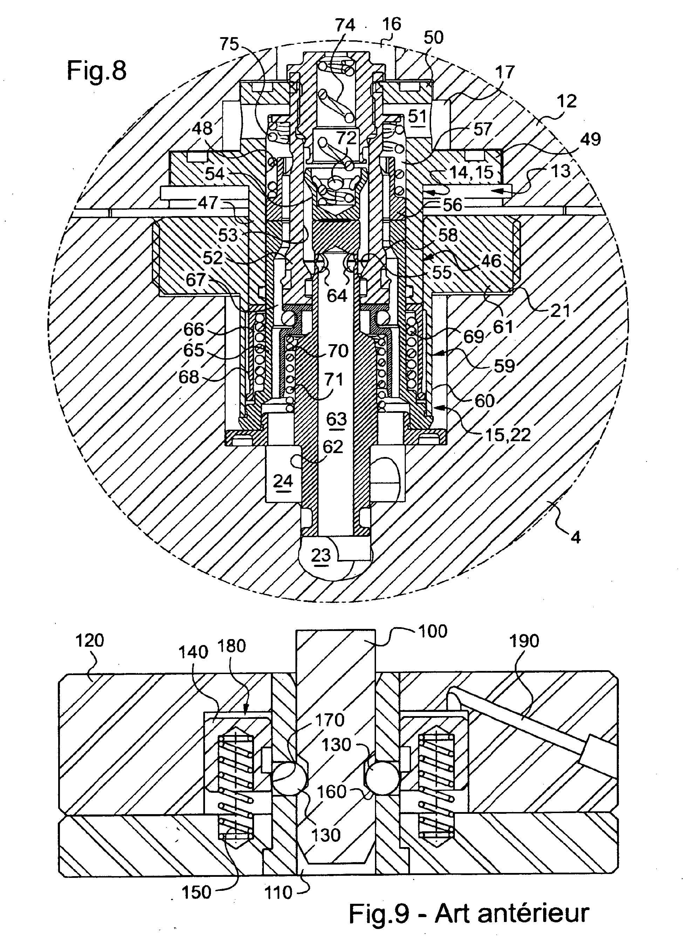

Selon une technologie connue, utilisée jusqu'à ce jour par la demanderesse et illustrée sur la figure 9, le fond de moule (non représenté) est fixé sur une interface formant une partie mâle, munie d'un embout 100 s'étendant en saillie au centre de l'interface du côté opposé au fond de moule, cet embout 100 venant se loger dans un trou 110 ménagé au centre du support 120. Des billes 130, actionnées de manière pneumatique via un verrou 140 monté sur ressorts 150, viennent coopérer radialement avec une portée tronconique 160 de l'embout 100 pour bloquer celui-ci par rapport au support 120. Les billes 110 sont bloquées en position au moyen d'une rampe 170 tronconique formée sur le verrou 140, lequel est monté en translation dans une chambre 180 annulaire dans laquelle débouche une canalisation 190 d'amenée d'air sous pression. Une autre realisation est divulgue dans US 5 750 161.

Le raccord fluidique est réalisé au moyen de deux embouts cylindriques déportés (non représentés) : l'un pour l'arrivée, l'autre pour l'évacuation du fluide, prévus en saillie sur l'interface et venant se loger dans des trous ménagés en regard dans le support, ces trous constituant les extrémités du conduit d'arrivée et du conduit d'évacuation, respectivement.

Un inconvénient de cette technologie, qui a donné et continue de donner satisfaction, est que la présence de l'embout central sur l'interface ne permet ni de poser, ni de stocker le fond de moule sans risquer de heurter l'embout, ce qui en le désaxant pourrait rendre son introduction dans la sellette difficile, voire impossible, empêchant ainsi le couplage du fond de moule et du support. La demanderesse a donc souhaité proposer une solution alternative qui remédie notamment à cet inconvénient.

A cet effet, l'invention propose un dispositif de fixation amovible avec raccord fluidique d'un fond de moule sur un support selon la revendication 1, et un support correspondant selon la revendication 10.

La disposition périphérique du mécanisme de verrouillage a deux avantages. Premièrement, l'accessibilité manuelle du mécanisme peut facilite le remplacement du fond de moule sans qu'il soit nécessaire de recourir à un actionnement pneumatique. Deuxièmement, cette disposition permet le montage d'un raccord fluidique au centre du support, au bénéfice de la compacité de l'ensemble.

Suivant un mode de réalisation, le support présente un corps central entouré par la cage périphérique, le corps et la cage définissant entre eux un espace annulaire dans lequel est monté un coulisseau déplaçable entre une position de verrouillage dans laquelle il se trouve au droit des billes, et une position de libération dans laquelle il est écarté des billes.

La cage et le corps forment par exemple un ensemble monobloc. Le coulisseau est de préférence sollicité vers sa position de verrouillage par au moins un ressort de rappel. Par ailleurs, le corps peut être muni en son centre d'un logement pour le raccord fluidique. Suivant un mode de réalisation, le logement définit une chambre d'arrivée d'un fluide caloporteur et une chambre d'évacuation de ce fluide.

Le verrou est de préférence sollicité vers sa position de verrouillage par au moins un ressort de rappel. Suivant un mode de réalisation, le verrou comprend une douille et une bride annulaire, montée dans la douille et dans laquelle est formée la rampe.

En outre, la partie femelle est de préférence pourvue d'un trou propre à recevoir un pion de centrage dont est pourvue la partie mâle.

D'autres objets et avantages de l'invention apparaîtront à la lumière de la description faite ci-après en référence aux dessins annexés dans lesquels :
- la figure 1 est une vue en perspective, environ à l'échelle 1, montrant un fond de moule fixé sur un support ;
- la figure 2 est une vue d'élévation en coupe, environ à l'échelle 1, du fond de moule et du support, séparés l'un de l'autre ;
- la figure 3 est une vue analogue à la figure 2, où l'on a représenté en outre le raccord fluidique ;
- la figure 4 est une vue montrant à échelle élargie un détail du support dans la configuration de la figure 2 ou de la figure 3 ;
- la figure 5 est une vue d'élévation en coupe, environ à l'échelle 1, du fond de moule et du support, couplés l'un à l'autre ;
- la figure 6 est une vue analogue à la figure 5, où l'on a représenté en outre le raccord fluidique ;
- la figure 7 est une vue montrant à échelle élargie un détail du support dans la configuration de la figure 5 ou de la figure 6 ;
- la figure 8 est une vue montrant à échelle élargie le raccord fluidique dans la configuration de la figure 6 ;
- la figure 9 est une vue en coupe d'un dispositif de fixation d'un fond de moule sur un support, conformément à l'art antérieur décrit ci-dessus.

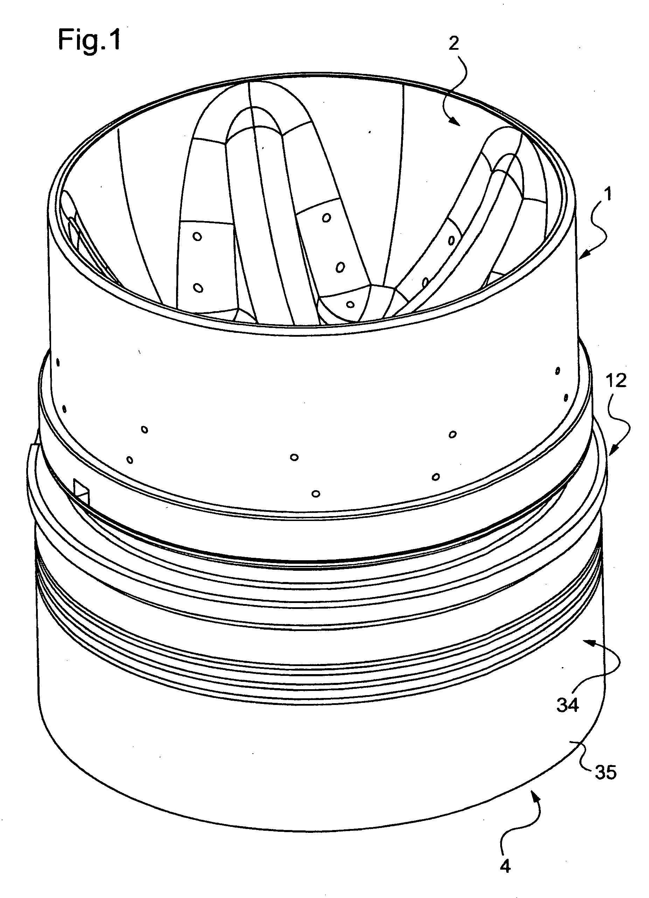

Sur la figure 1 est représenté un fond de moule 1 qui se présente sous la forme d'un bloc de métal (en acier ou dans un alliage d'aluminium) présentant, sur une face supérieure, une empreinte 2 en creux destinée à conférer sa forme au fond d'un récipient.

Grâce à un dispositif **3** de fixation amovible, le fond de moule **1** est monté de manière rigide mais non permanente sur un support **4,** ci-après dénommé sellette, mobile suivant une direction axiale confondue avec un axe **A** général de symétrie du fond de moule 1 et de la sellette **4.**

Le fond **4** est muni d'un conduit **5** pour la circulation d'un fluide caloporteur, creusé en spirale - ou, en variante, en portions de cercles concentriques - dans une face inférieure du fond **4,** opposée à l'empreinte **2.**

Le dispositif **3** de fixation comprend une partie mâle **6** et une partie femelle **7.** Suivant un mode de réalisation, la partie femelle **7** est portée par le fond de moule **1** et la partie mâle **6** par la sellette **4.** Suivant un mode de réalisation préféré correspondant à la présente description, la partie femelle **7** est portée par la sellette **4,** et la partie mâle **6** par le fond de moule **1.**

La partie mâle **6** comprend une couronne **8** cylindrique munie, à une extrémité opposée au fond de moule **1,** d'un bourrelet **9** annulaire en saillie radiale vers l'extérieur, définissant une portée **10** tronconique. La partie mâle **6** comprend en outre un pion **11** de centrage désaxé.

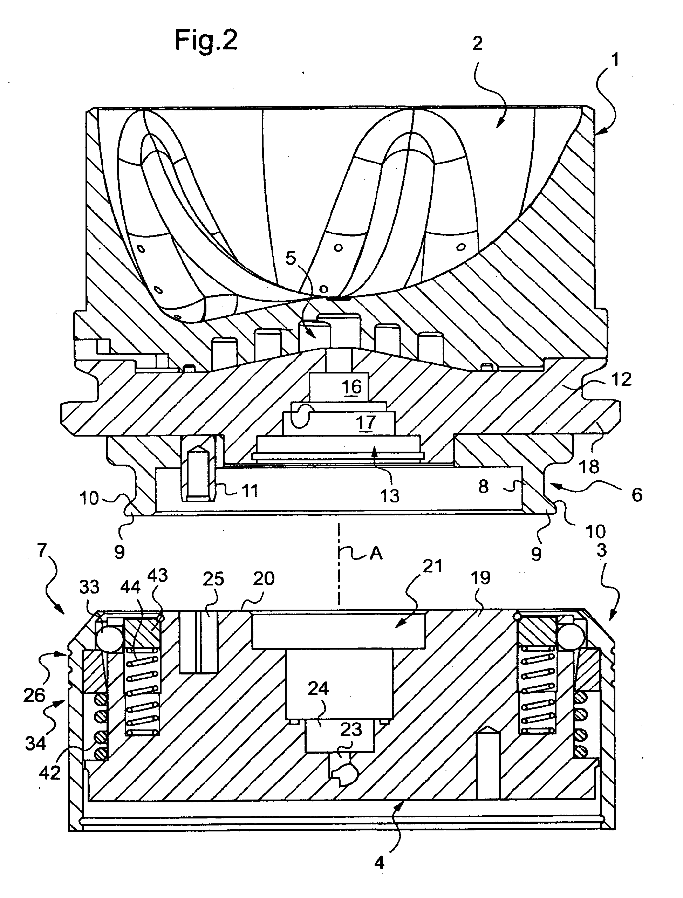

Le fond de moule **1** et la couronne **8** sont tous deux fixés, à l'opposé l'un de l'autre, sur une semelle **12** qui forme interface entre le fond de moule **1** et la sellette **4.** Comme cela est visible sur la figure 2, la semelle **12** est pourvue en son centre d'une succession d'alésages formant un logement **13** pour une partie mâle **14** d'un raccord 15 fluidique. Le logement **13** se prolonge par une chambre **16** d'arrivée débouchant dans une portion centrale du conduit **5.**

Une portion périphérique du conduit **5** est par ailleurs reliée au logement **13** par un canal percé dans la semelle **12** et débouchant dans l'un des alésages qui forme ainsi une chambre d'évacuation **17** du fluide ayant circulé dans le conduit **5.**

La semelle **12** est munie sur son pourtour d'une collerette **18** sur laquelle viennent s'emboîter deux demi-moules (non représentés). Un chanfrein assure le centrage mutuel du fond de moule **1** et des demi-moules, lesquels exercent ainsi sur la semelle **12** un effort important (de plusieurs centaines de Newton) dirigé axialement à l'opposé de la sellette **4.**

La sellette **4** comporte un corps **19** central cylindrique pourvu en son centre, du côté d'une face **20** supérieure du corps, d'une succession d'alésages formant un logement **21** pour une partie femelle **22** du raccord fluidique **15.** Ce logement **21** définit une chambre **23** d'arrivée, dans laquelle débouche un canal d'arrivée du fluide caloporteur, percé dans le corps **19,** et un chambre **24** d'évacuation dans laquelle débouche un canal (non représenté) d'évacuation du fluide, également percé dans le corps **19.** Un perçage **25** désaxé, propre à recevoir le pion **11** de centrage de la partie mâle **6,** est réalisé dans la face **20** supérieure à distance du logement **21** central.

La partie femelle **7** du dispositif **3** de fixation comprend un mécanisme **26** de verrouillage mutuel du fond de moule **1** et de la sellette **4,** qui comporte une cage **27** tubulaire périphérique entourant le corps **19** avec lequel elle forme un ensemble monobloc. La cage **27** est d'un diamètre supérieur au corps **19,** de sorte qu'est défini entre la cage **27,** extérieure, et le corps **19,** intérieur, un espace **28** annulaire qui débouche sur la face supérieure **20,** et qui est fermé du côté opposé par un fond **29.**

La sellette **4** se prolonge radialement, au-delà de la cage **27,** par une collerette **30** qui définit un épaulement **31** tourné du côté de la face supérieure **20.**

La cage **27** est percée radialement d'une rangée annulaire de trous **32.** Le mécanisme **26** de verrouillage comprend une pluralité de billes **33** logées chacune dans un trou **32.** Les trous **32** sont cylindriques et présentent vers l'intérieur un lamage 73 qui en restreint localement la section, limitant ainsi le débattement radial des billes **33** vers l'intérieur.

Le mécanisme **26** de verrouillage comprend en outre un verrou **34** monté coulissant sur la sellette **4.** Ce verrou **34** comprend une douille **35** munie d'une jupe **36** cylindrique entourant la sellette **4.** La jupe **36** se prolonge, du côté de la face supérieure **20,** par une section de moindre diamètre formée par un alésage **37** séparé de la jupe **36** par un lamage **38.** A une extrémité supérieure, au-delà de l'alésage **37,** la douille **35** présente un rétrécissement formé par un chanfrein **39** intérieur.

Le verrou **34** comprend en outre une bride **40** annulaire rapportée, emmanchée dans la jupe **36** et intercalée entre celle-ci et la cage **27,** sur laquelle elle peut coulisser. La bride **40** définit vers l'intérieur une rampe **41** tronconique à conicité tournée vers la face supérieure **20.** Un ressort **42** de rappel travaillant en compression est monté autour de la cage 27 en étant intercalé entre la bride **40** et l'épaulement **31.**

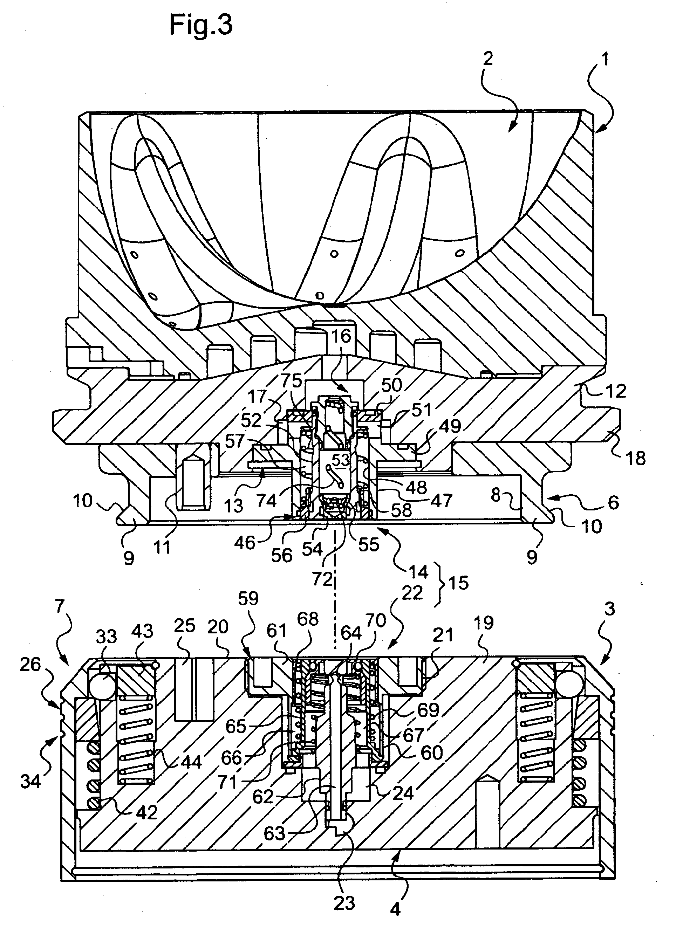

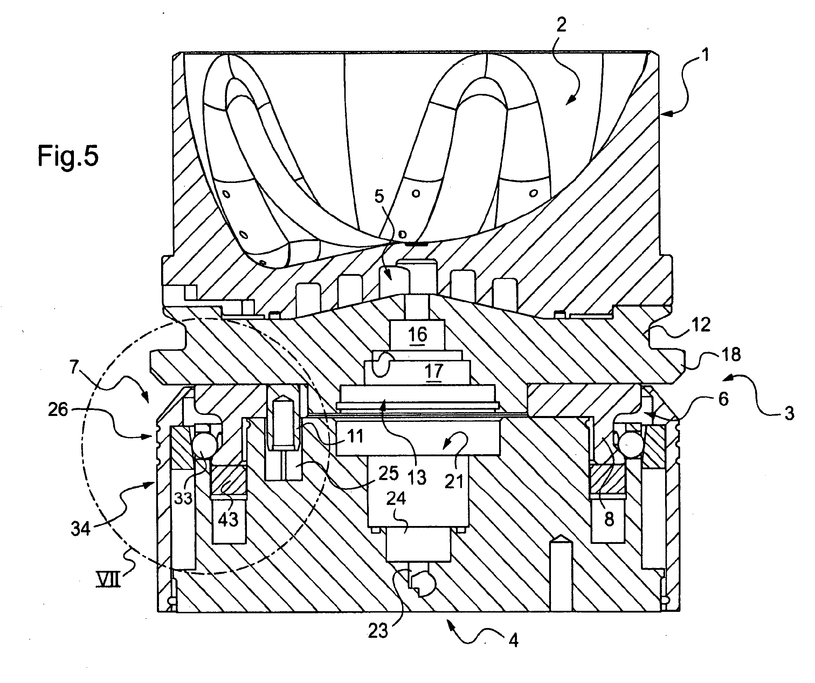

Le verrou **34** est ainsi déplaçable axialement, par coulissement de la bride **40** sur la cage **27,** entre une position de verrouillage (figures 5, **6****,** 7) où la rampe **41** se trouve au droit des billes **33** et exerce sur celles-ci un effort radial dirigé vers l'axe **A,** et une position de libération (figures 2, 3, 4) dans laquelle la rampe **41** est écartée axialement des billes **33,** et où l'alésage **37** se trouve au droit de celles-ci. Le ressort **42,** qui plaque la bride **40** contre le lamage **38,** sollicite en permanence le verrou **34** vers sa position de verrouillage.

Compte tenu de sa disposition périphérique, la douille **35** est accessible à la main. Le tarage du ressort **42** est de préférence choisi pour permettre un déplacement manuel du verrou **34,** à l'encontre de la force de rappel exercée par le ressort **42,** vers sa position de libération.

Le mécanisme 26 de verrouillage comprend en outre un coulisseau 43 annulaire monté dans l'espace annulaire 28 entre le corps 19 et la cage 27 et déplaçable axialement entre une position de verrouillage dans laquelle il est écarté des billes 33 (figures 5, 6,7), et une position de libération dans laquelle il se trouve au droit des billes 33 (figures 2, 3, 4). Des ressorts 44 de rappel travaillant en compression, insérés dans des trous 29 ménagés au fond de l'espace annulaire 28, sollicitent en permanence le coulisseau 43 vers sa position de libération. Un jonc 45 annulaire est monté autour du corps 19 à une extrémité supérieure de celui-ci. Ce jonc 45 forme une butée contre laquelle le coulisseau 43 est plaqué par les ressorts **44** dans sa position de libération. Le jonc **45** limite ainsi la course du coulisseau **44** et empêche son retrait de l'espace annulaire **28.**

Il est à noter que, sur les figures 5, 6 et 7, les ressorts **42** et **44** ne sont pas représentés, à des fins de simplification.

Pour assembler le mécanisme **26** de verrouillage, on peut procéder comme suit. On commence par monter le ressort **42** autour de la cage **27.** On monte ensuite le verrou **34,** bride **40** incluse, en l'enfilant sur la cage **27.** Puis on appuie sur le verrou **34** à l'encontre du ressort **42** jusqu'à faire apparaître les logements **32** dans lesquels on introduit les billes **33.** On relâche ensuite le verrou **34,** les billes **33** étant repoussées au fond de leurs logements **32** en venant en butée contre les lamages **73.** Tout en maintenant le verrou **34** dans sa position déverrouillée, où les billes **33** peuvent sortir radialement de leurs logements **32** en venant s'appliquer contre l'alésage **37,** on monte les ressorts **44** et on introduit le coulisseau **43** dans l'espace annulaire **28** en le poussant à l'encontre du ou des ressorts **44.** Enfin, tout en maintenant le verrou **34** dans sa position de libération et le coulisseau **43** dans l'espace annulaire **28,** on monte le jonc **45** sur le corps **19** et on relâche le tout, achevant ainsi le montage, simple et rapide, du mécanisme **26.**

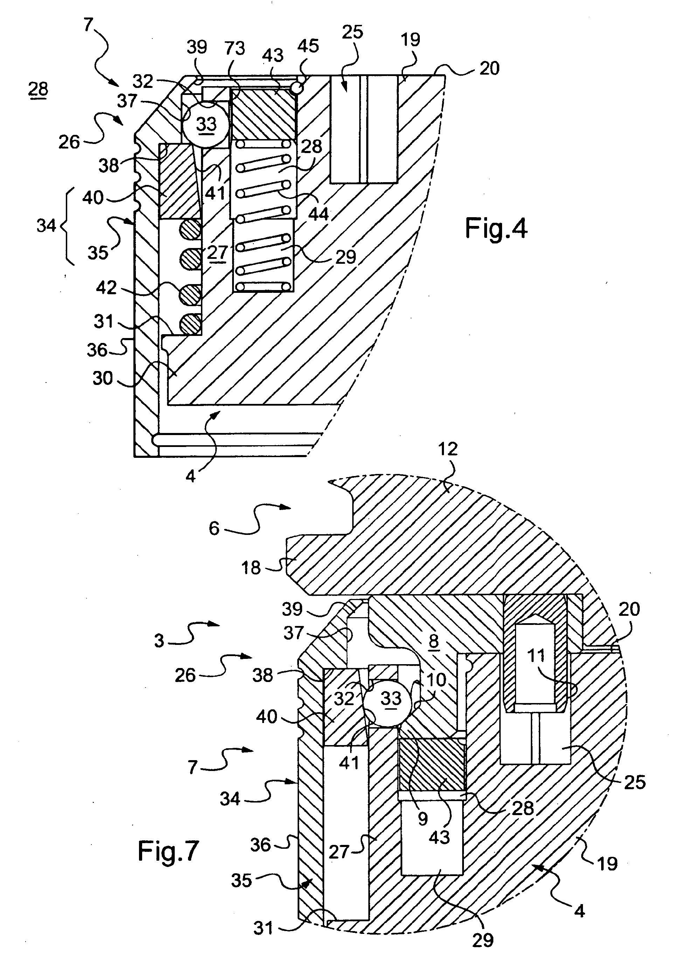

Le mécanisme **26** de verrouillage peut adopter deux configurations, selon la position du verrou **34** et du coulisseau **43 :**
- une configuration de libération (figures 2, 3, 4), dans laquelle le verrou **34** et le coulisseau **43** sont tous deux dans leur position de libération, et où les billes **33** sont maintenues entre le coulisseau **43** d'une part et l'alésage **37** de la douille **35** d'autre part. Comme cela est visible sur la figure 4, les billes **33** présentent une partie faisant saillie radialement de leur logement **32** vers l'extérieur, contre laquelle vient buter la bride **40** sous la force de rappel exercée par le ressort **42,** ce qui limite la course du verrou **34** et empêche sa séparation de la sellette **4.** Dans cette configuration, la course du verrou **34** est également limitée dans l'autre sens par le chanfrein **39,** qui comme la bride **40** (mais de l'autre côté des billes **33),** vient buter contre la partie des billes **33** en saillie. Le verrou **34** se trouve ainsi bloqué dans sa position de libération ;
- une configuration de verrouillage (figures 5, 6, 7), dans laquelle le verrou **34** et le coulisseau **43** sont tous deux dans leur position de verrouillage. Le coulisseau **43,** repoussé à l'encontre de son ressort **44** de rappel vers sa position de verrouillage et ainsi écarté des billes **33,** permet à celles-ci de se déplacer radialement vers l'axe **A,** sous la pression radiale exercée par la rampe **41.**

La fixation de la partie mâle **6** (et donc du fond de moule 1) sur la partie femelle 7 (c'est-à-dire sur la sellette **4)** s'effectue comme suit, à partir de la configuration de libération de la partie femelle 7 (figures 2, 3, **4****,** 5). On commence par disposer de manière coaxiale la partie mâle **6** et la partie femelle **7,** en les orientant angulairement de sorte que le pion 11 de centrage se trouve au droit du perçage **25.** Puis on emboîte la partie mâle **6** dans la partie femelle 7, la couronne **8** pénétrant dans l'espace annulaire **28** en repoussant le coulisseau **43** à l'encontre de la force de rappel du ressort **44.** Tant que le coulisseau **43** n'a pas atteint sa position de verrouillage, les billes **33** restent immobiles, maintenant le verrou **43** dans sa position de libération. Dès lors que le coulisseau **44** a atteint sa position de verrouillage, les billes 33 sont repoussées radialement vers l'intérieur par la bride 40 sous la poussée du ressort **42,** le verrou **43** étant brusquement déplacé dans sa position de verrouillage. Dans cette position, la rampe 41 exerce une pression radiale sur les billes **33** qui, de la sorte, viennent s'appliquer radialement contre la portée 10 tronconique de la couronne **8,** empêchant ainsi celle-ci d'être retirée de l'espace annulaire **28** et assurant la fixation de la partie mâle 6 sur la partie femelle 7.

La saillie du lamage **73** dans le logement **32** est assez faible pour qu'en configuration verrouillée de la partie femelle **7** les billes **33,** en butée contre le lamage **73,** dépassent suffisamment de leur logement **32** pour assurer une retenue solide de la partie mâle **6,** pouvant résister à une force de traction axiale de plusieurs dizaines de Newton correspondant à la traction exercée par les demi-moules sur la semelle **12** lors de la fermeture du moule.

Pour séparer la partie mâle **6** de la partie femelle, on repousse manuellement le verrou **34** vers sa position de libération à l'encontre de la force de rappel exercée par le ressort **42.** Dès lors que le verrou **43** a atteint sa position de libération, les billes **33** sont libres de se mouvoir radialement vers l'extérieur. Sous l'effet de la force de rappel exercée par le ressort **44,** la partie mâle 6 est, par l'intermédiaire du coulisseau **43,** repoussée hors de l'espace annulaire **28,** la portée **10** tronconique repoussant les billes **33** radialement vers l'extérieur. Les billes **33** venant se loger entre le chanfrein **39** et la bride **40** bloquent le verrou **34** en position de libération tout en permettant au coulisseau **43** d'occuper à nouveau sa position de libération, la partie femelle **7** retrouvant ainsi sa configuration de libération.

On décrit à présent le raccord fluidique.

La parie mâle **14,** montée dans le logement **13** ménagé dans la semelle **12,** comporte un embout mâle **46** comprenant :
- un manchon **47** tubulaire s'étendant en saillie et muni d'un alésage **48** central,
- une collerette **49** par laquelle l'embout **46** est fixé sur la semelle **12,**
- une tête **50** cylindrique munie de trous **51** radiaux traversants, débouchant à la fois dans l'alésage **48** et dans la chambre **17** d'évacuation.

La partie mâle **14** comporte en outre une chemise **52** montée coaxialement dans l'embout **46.** La chemise **52** présente un alésage **53** central traversant, qui s'ouvre à une extrémité inférieure et débouche, à une extrémité supérieure opposée, dans la chambre d'arrivée **16.**

La partie mâle **14** comprend de plus un clapet **54** mobile monté coulissant dans l'alésage **53** de la chemise **52,** à l'extrémité inférieure de celle-ci. Dans une configuration fermée de la partie mâle **14,** le clapet **54,** repoussé par un ressort **74** travaillant en compression, est en appui contre un siège 55 tronconique interne de la chemise **52,** dont il obture l'extrémité inférieure de l'alésage **53.**

La partie mâle **14** comprend enfin un piston **56,** monté coulissant dans un espace **57** annulaire défini entre la chemise **52** et le manchon **47.** Dans la configuration fermée de la partie mâle **14,** le piston **56,** repoussé par un ressort 75 travaillant en compression, est en appui contre un siège **58** tronconique externe de la chemise **52,** obturant l'espace **57** annulaire.

La partie femelle **22** comporte quant à elle un embout femelle 59, comprenant un manchon **60** tubulaire surmonté d'une collerette **61** par laquelle l'embout **59** est vissé dans le corps **19** de la sellette **4.**

La partie femelle **22** comporte en outre une tige **62** centrale creuse montée coaxialement dans l'embout femelle **59** et vissée dans le corps **19** au fond du logement **21.** La tige **62** est munie d'un alésage **63** qui débouche, à une extrémité inférieure, dans la chambre d'arrivée **23.** A une extrémité supérieure, la tige **62** est percée de trous **64** radiaux traversants qui débouchent dans l'alésage **63.**

La partie femelle **22** comporte aussi un fourreau **65,** monté coaxialement dans l'embout 59, entre le manchon **60** et la tige **62,** avec lesquels le fourreau **65** définit respectivement un espace **66** annulaire externe, et un espace **67** annulaire interne qui débouche dans la chambre d'évacuation **24.**

La partie femelle **22** comporte également un coulisseau **68,** monté mobile axialement dans l'espace **66** annulaire externe. Dans une configuration fermée de la partie femelle **22,** le coulisseau **68** occupe une position fermée dans laquelle il obture l'espace **66** annulaire externe. Un ressort **69** monté dans l'espace **66** annulaire externe sollicite en permanence le coulisseau **68** vers sa position fermée.

La partie femelle **22** comprend enfin une capsule **70,** montée mobile axialement dans l'espace **67** annulaire interne. Dans une configuration fermée de la partie femelle **22,** la capsule **70** occupe une position fermée dans laquelle elle obture l'espace **67** annulaire interne. Un ressort **71** monté dans l'espace **67** annulaire interne sollicite en permanence la capsule **70** vers sa position fermée.

En configuration fermée de la partie femelle **22** (configuration adoptée lorsque le fond de moule **1** et la sellette 4 sont séparés), la chambre **23** d'arrivée et la chambre **24** d'évacuation sont mises en communication via l'alésage **63** et les trous **64.** Le fluide caloporteur circule, depuis la chambre **23** d'arrivée, par l'alésage **63** à l'extrémité duquel il passe par les trous **64** dans l'espace **67** annulaire interne et revient vers la chambre **24** d'évacuation.

Lors du montage du fond de moule **1** sur la sellette **4,** la partie mâle **14** du raccord **15** fluidique s'emboîte dans la partie femelle **22.** La tige **62,** introduite dans l'alésage **53** de la chemise **52,** repousse le clapet **54** à l'encontre de son ressort **74** de rappel. Le fourreau 65, introduit ans l'espace **57** annulaire, repousse le piston **56** à l'encontre de son ressort **75** de rappel. Réciproquement, la chemise **52,** introduite dans l'espace **67** annulaire interne, repousse la capsule **70.** Le manchon **60,** introduit dans l'espace **66** annulaire externe, repousse le coulisseau **68.**

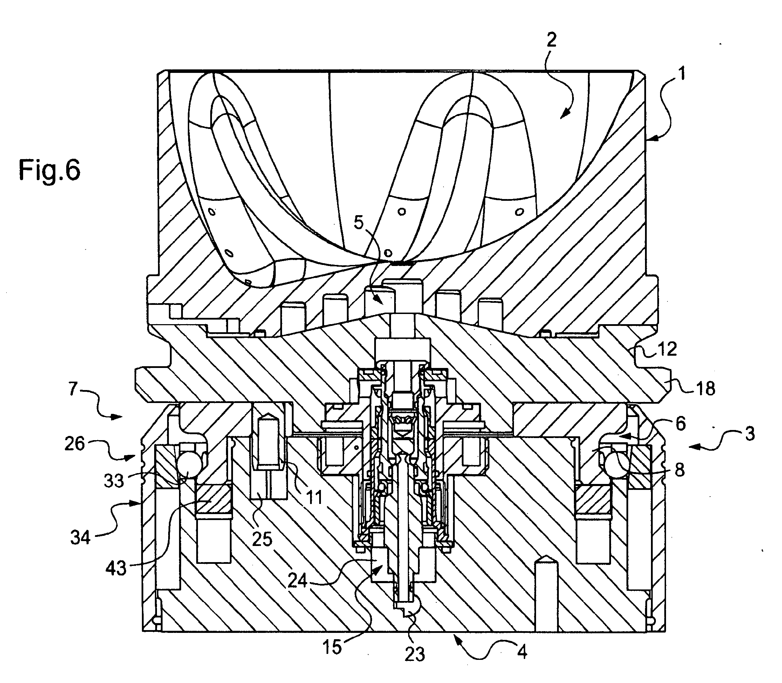

La partie mâle **14** et la partie femelle **22,** ainsi emboîtés, adoptent tous deux une configuration ouverte (figures 6 et 8) dans laquelle :
- les trous **64** radiaux de la tige **62** débouchent dans l'alésage **53** de la chemise **52,** mettant ainsi en communication les chambres d'arrivée **16, 23** de la sellette **4** et de la semelle **12,** ce qui permet l'alimentation du conduit **5** du fond de moule **1** en fluide caloporteur ;
- la capsule **70,** repoussée au-delà des trous **64** de la tige **62,** isole son alésage **63** de l'espace **67** annulaire interne (en d'autre termes, la capsule **70** isole l'arrivée de fluide de son évacuation) ;
- l'espace **66** annulaire interne de l'embout femelle **59** est mis en communication avec l'espace annulaire **57** de l'embout mâle **46,** ce qui permet l'évacuation du fluide caloporteur en provenance du conduit **5** du fond de moule 1.

A l'arrivée, le fluide passe par l'alésage **63** de la tige **62,** sort par les trous **64** dans l'alésage **53** dans la chemise **52,** transite par des trous **72** radiaux percés dans le clapet **54** et rejoint le conduit 5 du fond de moule 1 via la chambre d'arrivée **16.**

A l'évacuation, le fluide passe par la chambre **17** d'évacuation, débouche dans l'espace **57** annulaire de l'embout mâle **46** par les trous **51** radiaux, poursuit son chemin par l'espace **67** annulaire interne avant de rejoindre la chambre **24** d'évacuation.

Le raccord **15** qui vient d'être décrit permet, on l'a vu, une arrivée et une évacuation coaxiales du fluide caloporteur. In est ainsi possible de monter ce raccord **16** au centre de la sellette **4** et de la semelle **14,** au bénéfice de la compacité de l'ensemble.

## Revendications

1. Dispositif (3) de fixation amovible avec raccord fluidique d'un fond de moule (1) sur un support (4), ce dispositif (3) comprenant une partie mâle (6) et une partie femelle (7), ladite partie mâle (6) présentant une portée (10) tronconique, ladite partie femelle (7) comprenant un mécanisme (26) de verrouillage incluant des billes (33) aptes à coopérer avec ladite portée (10), la partie femelle (7) comprenant une cage (27) périphérique munie de trous (2) dans lesquels sont logées les billes (33), et un verrou (34) muni d'une rampe (41) annulaire, monté autour de ladite cage (27), accessible manuellement et déplaçable entre une position de verrouillage dans laquelle la rampe (41) se trouve au droit des billes (33), et une position de libération dans laquelle la rampe (41) est écartée des billes (33), ce dispositif (3) étant **caractérisé en ce que** le support (4) présente un corps (19) central entouré par la cage (27) périphérique, le corps (19) et la cage (27) définissant entre eux un espace (28) annulaire dans lequel est monté un coulisseau (43) déplaçable entre une position de verrouillage dans laquelle il se trouve au droit des billes (33), et une position de libération dans laquelle il est écarté des billes (33).

2. Dispositif (3) selon la revendication 1, dans lequel la cage (27) et le corps (19) forment un ensemble monobloc.

3. Dispositif (3) la revendication 1 ou 2, dans lequel le coulisseau (43) est sollicité vers sa position de verrouillage par au moins un ressort (44) de rappel.

4. Dispositif (3) selon l'une des revendications 1 à 3, dans lequel le corps (19) est muni en son centre d'un logement (21) pour le raccord fluidique.

5. Dispositif (3) selon la revendication 4, dans lequel le logement (21) définit une chambre (16) d'arrivée d'un fluide caloporteur et une chambre (17) d'évacuation de ce fluide.

6. Dispositif (3) selon l'une des revendications 1 à 5, dans lequel le verrou (34) est sollicité vers sa position de verrouillage par au moins un ressort (42) de rappel.

7. Dispositif (3) selon l'une des revendications 1 à 6, dans lequel le verrou (34) comprend une douille (35) et une bride (40) annulaire, montée dans la douille (35) et dans laquelle est formée la rampe (41).

8. Dispositif (3) selon l'une des revendications 1 à 7, dans lequel la partie femelle (7) est pourvue d'un perçage (25) propre à recevoir un pion (11) de centrage dont est pourvue la partie mâle (6).

9. Dispositif (3) selon l'une des revendications 1 à 8, dans lequel la partie mâle (6) est portée par le fond de moule (1), et la partie femelle (7) par le support (4).

10. Support (4) pour la fixation amovible avec raccord fluidique d'un fond de moule portant une partie mâle (6) présentant une portée (10) tronconique, ce support portant une partie femelle (7) comprenant un mécanisme (26) de verrouillage incluant une cage (27) périphérique munie de trous (32) dans lesquels sont logées des billes (33) aptes à coopérer avec la portée (10) du fond de moule, et un verrou (34) muni d'une rampe (41) annulaire, monté autour de ladite cage (27), accessible manuellement et déplaçable entre une position de verrouillage dans laquelle la rampe (41) se trouve au droit des billes (33), et une position de libération dans laquelle la rampe (41) est écartée des billes (33), ce support (4) étant **caractérisé en ce qu'**il comprend un corps (19) central entouré par la cage (27) périphérique, le corps (19) et la cage (27) définissant entre eux un espace (28) annulaire dans lequel est monté un coulisseau (43) déplaçable entre une position de libération dans laquelle il se trouve au droit des billes (33), et une position de verrouillage dans laquelle il est écarté des billes (33).

11. Support (4) selon la revendication 10, dans lequel la cage (27) et le corps (19) forment un ensemble monobloc.

12. Support (4) selon la revendication 10 ou 11, dans lequel le coulisseau (43) est sollicité vers sa position de verrouillage par au moins un ressort (44) de rappel.

13. Support (4) selon l'une des revendications 10 à 12, dans lequel le corps (19) est muni en son centre d'un logement (21) pour le raccord fluidique.

14. Support (4) selon la revendication 13, dans lequel le logement (21) définit une chambre (16) d'arrivée d'un fluide caloporteur et une chambre (17) d'évacuation de ce fluide.

15. Support (4) selon l'une des revendications 10 à 14, dans lequel le verrou (34) comprend une douille (35) et une bride (40) annulaire, montée dans la douille (35) et dans laquelle est formée la rampe (41).

## Patentansprüche

1. Vorrichtung (3) zur lösbaren Befestigung mit Fluidanschluss eines Formbodens (1) auf einem Träger (4), wobei diese Vorrichtung (3) einen Einsteckteil (6) und einen Aufnahmeteil (7) enthält, wobei der Einsteckteil (6) eine kegelstumpfförmige Auflagefläche (10) aufweist, wobei der Aufnahmeteil (7) einen Verriegelungsmechanismus (26) enthält, der Kugeln (33) umfasst, die mit der Auflagefläche (10) zusammenwirken können, wobei der Aufnahmeteil (7) einen Umfangskäfig (27), der mit Löchern (32) versehen ist, in denen die Kugeln (33) untergebracht sind, und einen mit einer ringförmigen Rampe (41) versehenen Riegel (34) enthält, der um den Käfig (27) herum montiert, manuell zugänglich und zwischen einer Verriegelungsstellung, in der die Rampe (41) sich vor den Kugeln (33) befindet, und einer Freigabestellung verschiebbar ist, in der die Rampe (41) von den Kugeln (33) entfernt ist, wobei diese Vorrichtung (3) **dadurch gekennzeichnet ist, dass** der Träger (4) einen vom Umfangskäfig (27) umgebenen zentralen Körper (19) aufweist, wobei der Körper (19) und der Käfig (27) zwischen sich einen ringförmigen Raum (28) definieren, in den ein Schlitten (43) montiert ist, der zwischen einer Verriegelungsstellung, in der er sich vor den Kugeln (33) befindet, und einer Freigabestellung verschiebbar ist, in der er von den Kugeln (33) entfernt ist.

2. Vorrichtung (3) nach Anspruch 1, wobei der Käfig (27) und der Körper (19) eine einstückige Einheit formen.

3. Vorrichtung (3) nach Anspruch 1 oder 2, wobei der Schlitten (43) von mindestens einer Rückstellfeder (44) in seine Verriegelungsstellung beaufschlagt wird.

4. Vorrichtung (3) nach einem der Ansprüche 1 bis 3, wobei der Körper (19) in seiner Mitte mit einer Aufnahme (21) für den Fluidanschluss versehen ist.

5. Vorrichtung (3) nach Anspruch 4, wobei die Aufnahme (21) eine Zufuhrkammer (16) eines Wärmeträgerfluids und eine Abflusskammer (17) dieses Fluids definiert.

6. Vorrichtung (3) nach einem der Ansprüche 1 bis 5, wobei der Riegel (34) von mindestens einer Rückstellfeder (42) in seine Verriegelungsstellung beaufschlagt wird.

7. Vorrichtung (3) nach einem der Ansprüche 1 bis 6, wobei der Riegel (34) eine Buchse (35) und einen ringförmigen Flansch (40) enthält, der in die Buchse (35) montiert ist und in dem die Rampe (41) geformt ist.

8. Vorrichtung (3) nach einem der Ansprüche 1 bis 7, wobei der Aufnahmeteil (7) mit einer Bohrung (25) versehen ist, die einen Zentrierstift (11) aufnehmen kann, mit dem der Einsteckteil (6) versehen ist.

9. Vorrichtung (3) nach einem der Ansprüche 1 bis 8, wobei der Einsteckteil (6) vom Formboden (1) und der Aufnahmeteil (7) vom Träger (4) getragen wird.

10. Träger (4) zur lösbaren Befestigung mit Fluidanschluss eines Formbodens, der einen Einsteckteil (6) mit einer kegelstumpfförmigen Auflagefläche (10) trägt, wobei dieser Träger einen Aufnahmeteil (7) trägt, der einen Verriegelungsmechanismus (26), der einen Umfangskäfig (27) umfasst, der mit Löchern (32) versehen ist, in denen Kugeln (33) untergebracht sind, die mit der Auflagefläche (10) des Formbodens zusammenwirken können, und einen mit einer ringförmigen Rampe (41) versehenen Riegel (34) enthält, der um den Käfig (27) herum montiert, manuell zugänglich und zwischen einer Verriegelungsstellung, in der die Rampe (41) sich vor den Kugeln (33) befindet, und einer Freigabestellung verschiebbar ist, in der die Rampe (41) von den Kugeln (33) entfernt ist, wobei dieser Träger (4) **dadurch gekennzeichnet ist, dass** er einen vom Umfangskäfig (27) umgebenen zentralen Körper (19) aufweist, wobei der Körper (19) und der Käfig (27) zwischen sich einen ringförmigen Raum (28) definieren, in den ein Schlitten (43) montiert ist, der zwischen einer Freigabestellung, in der er sich vor den Kugeln (33) befindet, und einer Verriegelungsstellung verschiebbar ist, in der er von den Kugeln (33) entfernt ist.

11. Träger (4) nach Anspruch 10, wobei der Käfig (27) und der Körper (19) eine einstückige Einheit formen.

12. Träger (4) nach Anspruch 10 oder 11, wobei der Schlitten (43) von mindestens einer Rückstellfeder (44) in seine Verriegelungsstellung beaufschlagt wird.

13. Träger (4) nach einem der Ansprüche 10 bis 12, wobei der Körper (19) in seiner Mitte mit einer Aufnahme (21) für den Fluidanschluss versehen ist.

14. Träger (4) nach Anspruch 13, wobei die Aufnahme (21) eine Zufuhrkammer (16) eines Wärmeträgerfluids und eine Abflusskammer (17) dieses Fluids definiert.

15. Träger (4) nach einem der Ansprüche 10 bis 14, wobei der Riegel (34) eine Buchse (35) und einen ringförmigen Flansch (40) enthält, der in die Buchse (35) montiert ist und in dem die Rampe (41) geformt ist.

## Claims

1. Device (3) for removably securing, with a fluid coupling, a mould bottom (1) to a mounting (4), this device (3) comprising a male part (6) and a female part (7), said male part (6) having a frustoconical shoulder (10), said female part (7) comprising a locking mechanism (26) including balls (33) that are able to engage with said shoulder (10), the female part (7) comprising a peripheral cage (27) provided with holes (32) in which the balls (33) are housed, and a lock (34) provided with an annular ramp (41), said lock (34) being mounted around said cage (27), manually accessible and movable between a locking position, in which the ramp (41) is in line with the balls (33), and a releasing position, in which the ramp (41) is spaced apart from the balls (33), this device (3) being **characterized in that** the mounting (4) has a central body (19) surrounded by the peripheral cage (27), the body (19) and the cage (27) defining between one another an annular space (28), in which there is mounted a slide (43) that is movable between a locking position, in which it is in line with the balls (33), and a releasing position, in which it is spaced apart from the balls (33).

2. Device (3) according to Claim 1, wherein the cage (27) and the body (19) form a one-piece assembly.

3. Device (3) according to Claim 1 or 2, wherein the slide (43) is urged into its locking position by at least one return spring (44).

4. Device (3) according to one of Claims 1 to 3, wherein the body (19) is provided at its centre with a housing (21) for the fluid coupling.

5. Device (3) according to Claim 4, wherein the housing (21) defines an inlet chamber (16) for a heat transfer fluid and an outlet chamber (17) for this fluid.

6. Device (3) according to one of Claims 1 to 5, wherein the lock (34) is urged into its locking position by at least one return spring (42).

7. Device (3) according to one of Claims 1 to 6, wherein the lock (34) comprises a sleeve (35) and an annular flange (14), which is mounted in the sleeve (35) and in which the ramp (41) is formed.

8. Device (3) according to one of Claims 1 to 7, wherein the female part (7) is provided with a hole (25) suitable for receiving a centring pin (11) with which the male part (6) is provided.

9. Device (3) according to one of Claims 1 to 8, wherein the male part (6) is carried by the mould bottom (1), and the female part (7) is carried by the mounting (4).

10. Mounting (4) for removably securing, with a fluid coupling, a mould bottom (1) carrying a male part (6) that has a frustoconical shoulder (10), this mounting carrying a female part (7) comprising a locking mechanism (26) including a peripheral cage (27) provided with holes (32) in which there are housed balls (33) that are able to engage with the shoulder (10) of the mould bottom, and a lock (34) provided with an annular ramp (41), said lock (34) being mounted around said cage (27), manually accessible and movable between a locking position, in which the ramp (41) is in line with the balls (33), and a releasing position, in which the ramp (41) is spaced apart from the balls (33), this mounting (4) being **characterized in that** it comprises a central body (19) surrounded by the peripheral cage (27), the body (19) and the cage (27) defining between one another an annular space (28) in which there is mounted a slide (43) that is movable between a releasing position, in which it is in line with the balls (33), and a locking position, in which it is spaced apart from the balls (33).

11. Mounting (4) according to Claim 10, wherein the cage (27) and the body (19) form a one-piece assembly.

12. Mounting (4) according to Claim 10 or 11, wherein the slide (43) is urged into its locking position by at least one return spring (44).

13. Mounting (4) according to one of Claims 10 to 12, wherein the body (19) is provided at its centre with a housing (21) for the fluid coupling.

14. Mounting (4) according to Claim 13, wherein the housing (21) defines an inlet chamber (16) for a heat transfer fluid and an outlet chamber (17) for this fluid.

15. Mounting (4) according to one of Claims 10 to 14, wherein the lock (34) comprises a sleeve (35) and an annular flange (14), which is mounted in the sleeve (35) and in which the ramp (41) is formed.
